(19) Europäisches Patentamt
European Patent Office
Office européen des brevets

(11) **EP 3 151 019 B1**

(12) **EUROPEAN PATENT SPECIFICATION**

(45) Date of publication and mention of the grant of the patent:
**03.07.2019 Bulletin 2019/27**

(51) Int Cl.:
***G01P 21/00*** (2006.01)  ***G11B 19/04*** (2006.01)
***G11B 33/14*** (2006.01)  ***H04M 1/00*** (2006.01)

(21) Application number: **15800318.6**

(86) International application number:
**PCT/JP2015/065114**

(22) Date of filing: **26.05.2015**

(87) International publication number:
**WO 2015/182612 (03.12.2015 Gazette 2015/48)**

(54) **PORTABLE APPARATUS, METHOD FOR CONTROLLING PORTABLE APPARATUS, AND CONTROL PROGRAM**

TRAGBARE VORRICHTUNG, VERFAHREN ZUR STEUERUNG DER TRAGBAREN VORRICHTUNG UND STEUERUNGSPROGRAMM

APPAREIL PORTATIF, PROCÉDÉ DE COMMANDE D'APPAREIL PORTATIF, ET PROGRAMME DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2014 JP 2014109418**

(43) Date of publication of application:
**05.04.2017 Bulletin 2017/14**

(73) Proprietor: **Kyocera Corporation**
**Kyoto-shi, Kyoto 612-8501 (JP)**

(72) Inventors:
• **TANABE, Shigeki**
**Kyoto-shi**
**Kyoto 612-8501 (JP)**
• **MORITA, Hideki**
**Kyoto-shi**
**Kyoto 612-8501 (JP)**

• **MASUIKE, Isao**
**Kyoto-shi**
**Kyoto 612-8501 (JP)**
• **SAITO, Shinya**
**Kyoto-shi**
**Kyoto 612-8501 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**JP-A- 2000 187 042    JP-A- 2006 107 657**
**JP-A- 2007 132 943    JP-A- 2014 025 791**
**US-A1- 2011 264 393   US-A1- 2011 301 901**
**US-A1- 2014 012 531**

## Description

### Field

The present disclosure relates to a mobile device, a method for controlling a mobile device, and a non-transitory storage medium.

### Background

Some cellular phones include an acceleration sensor. This acceleration sensor is used for various kinds of control of a cellular phone. Patent Literature 1 describes a cellular phone that uses an acceleration sensor for control, for example. This cellular phone cannot execute appropriate control if the accuracy of the acceleration sensor is low.
Prior art document US2014/0012531 discloses a method for calculating the acceleration offset in one of the three axis assuming that the device has no dynamic acceleration and the offset values in the other two axis are low.

### Citation List

### Patent Literature

Patent Literature 1: Japanese Patent Application Laid-open No. 2006-107657

### Summary

The mobile device including the acceleration sensor has room for improvement.
According to one aspect, there is provided a mobile device, comprising an acceleration sensor configured to detect accelerations in three axes, according to claim 1.
According to one aspect, there is provided a control method of a mobile device that controls functions based on accelerations in three axes of an acceleration sensor as claimed in claim 6.
According to one aspect, there is provided a non-transitory storage medium that stores a control program of a mobile device that controls functions based on accelerations in three axes of an acceleration sensor as claimed in claim 7.
The present disclosure can cause an acceleration sensor to function effectively.

### Brief Description of Drawings

FIG. 1 is a perspective schematic view of an appearance of a smartphone according to an embodiment.
FIG. 2 is a front schematic view of the appearance of the smartphone according to the embodiment.
FIG. 3 is a rear schematic view of the appearance of the smartphone according to the embodiment.
FIG. 4 is a block schematic view of a configuration of the smartphone according to the embodiment.
FIG. 5 is a diagram schematically illustrating a detection result of an acceleration sensor.
FIG. 6 is a screen example of the smartphone according to the embodiment.
FIG. 7 is a screen example of the smartphone according to the embodiment.
FIG. 8 is a diagram of an example of a control flow that the smartphone according to the embodiment performs.

### Detailed Description

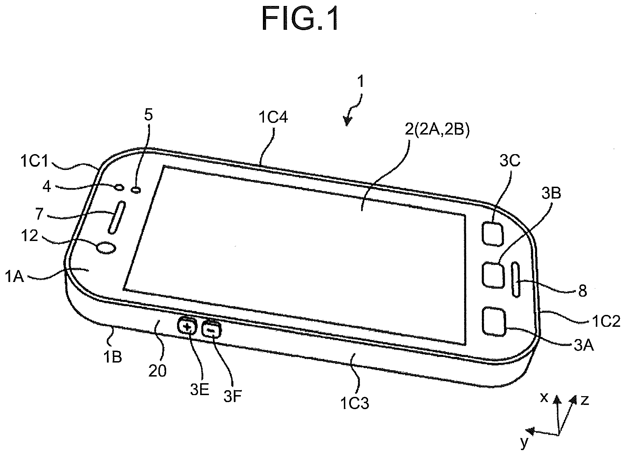

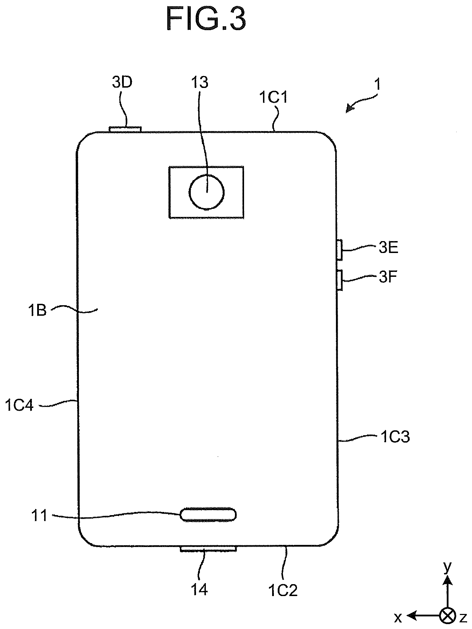

The following describes a plurality of embodiments for performing a mobile device of the present disclosure in detail with reference to the accompanying drawings. The following illustrates and describes a smartphone as an example of the mobile device.
The following describes an appearance of a smartphone 1 according to one of the embodiments with reference to FIG. 1 to FIG. 3. The smartphone 1 includes a housing 20. The housing 20 includes a front face 1A, a rear face 1B, and side faces 1C1 to 1C4. The front face 1A is a front face of the housing 20. The rear face 1B is a rear face of the housing 20. The side faces 1C1 to 1C4 are side faces that connect the front face 1A and the rear face 1B. In the following description, the side faces 1C1 to 1C4 may collectively be referred to as a side face 1C without specifying the side face/faces.
The smartphone 1 includes a touch screen display 2, buttons 3A to 3C, an illuminance sensor 4, a proximity sensor 5, a receiver 7, a microphone 8, and a camera 12 on the front face 1A. The smartphone 1 includes a speaker 11 and a camera 13 on the rear face 1B. The smartphone 1 includes buttons 3D to 3F and a connector 14 on the side face 1C. In the following description, the buttons 3A to 3F may collectively be referred to as a button 3 without specifying the button/buttons.

The touch screen display 2 includes a display 2A and a touch screen 2B. The display 2A includes a display device such as a liquid crystal display, an organic electro-luminescence panel, or an inorganic electro-luminescence panel. The display 2A can display objects. The objects include letters, images, symbols, and figures.

The touch screen 2B detects contact with the touch screen 2B by a finger, a stylus pen, or the like. The touch screen 2B can detect positions at which a plurality of fingers, a plurality of stylus pens, or the like have been brought into contact with the touch screen 2B.

The detection system of the touch screen 2B can employ a plurality of systems. Examples of the systems include an electrostatic capacitance system, a resistance film system, a surface acoustic wave system (or an ultrasonic system), an infrared system, an electromagnetic induction system, and a load detection system. The electrostatic capacitance system can detect the contact and approach of the finger, the stylus pen, or the like. In the following description, the finger, the stylus pen, or the like the contact of which is detected by the touch screen 2B may be referred to simply as a "finger" in order to simplify the description.

The smartphone 1 determines type of a gesture based on contact detected by the touch screen 2B, a position at which the contact has been made, a time during which the contact has been made, and a temporal change in a position at which the contact has been made. The gesture is an operation performed on the touch screen display 2. Examples of the gesture determined by the smartphone 1 include touch, long touch, release, swipe, tap, double tap, long tap, drag, flick, pinch, and spread.

The smartphone 1 performs operations in accordance with these gestures determined via the touch screen 2B. The smartphone 1 performs operations based on the gesture and can thereby achieve operability that is intuitive and easy-to-use for a user. The smartphone 1 performs operations corresponding to a screen displayed on the touch screen display 2 in accordance with the determined gesture. The operation of the smartphone 1 varies in accordance with the determined gesture and the displayed screen.

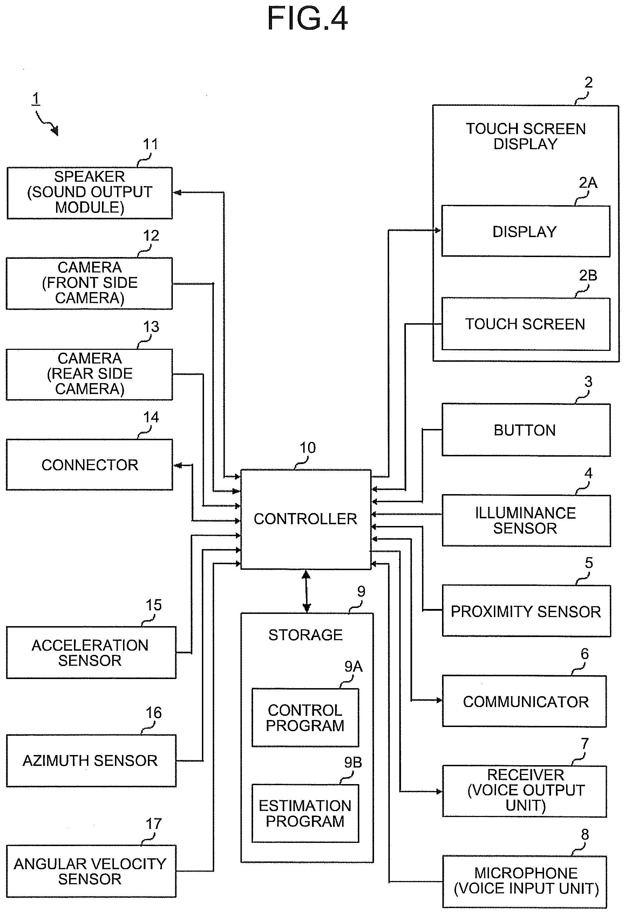

FIG. 4 is a block diagram of a configuration of the smartphone 1. The smartphone 1 includes the touch screen display 2, the button 3, the illuminance sensor 4, the proximity sensor 5, a communicator 6, the receiver 7, the microphone 8, a storage 9, a controller 10, the speaker 11, the camera 12, the camera 13, the connector 14, an acceleration sensor 15, an azimuth sensor 16, and an angular velocity sensor 17.

The touch screen display 2 includes the display 2A and the touch screen 2B. The display 2A displays the objects. The touch screen 2B includes a receiving area. The touch screen 2B receives contact to the receiving area as input. In other words, the touch screen 2B detects contact. The controller 10 detects the gesture on the smartphone 1. The controller 10 cooperates with the touch screen 2B to detect the gesture on the touch screen 2B (or the touch screen display 2). The controller 10 cooperates with the touch screen 2B to detect the gesture on the display 2A (or the touch screen display 2).

The button 3 is operated by the user. The button 3 includes a button 3A to a button 3F. The controller 10 cooperates with the button 3 to detect operations on the button. Examples of the operations on the button include, but are not limited to, click, double click, push, and long push.

The buttons 3A to 3C are a home button, a back button, or a menu button, for example. The buttons 3A to 3C may employ touch sensor type buttons. The button 3D is a power-on/power-off button of the smartphone 1, for example. The button 3D may also serve as a sleep/sleep release button. The buttons 3E and 3F are volume buttons, for example.

The illuminance sensor 4 can detect illuminance. The illuminance is intensity, brightness, or the like of light, for example. The illuminance sensor 4 may be used to adjust luminance of the display 2A, for example. The proximity sensor 5 can detect presence of a nearby object in a non-contact manner. The proximity sensor 5 may be used to detect that the touch screen display 2 has approached a face, for example.

The communicator 6 can communicate with another device by wireless communication. Communication systems performed by the communicator 6 include wireless communication standards. Examples of the wireless communication standards include, but are not limited to, cellular phone communication standards such as 2G, 3G, and 4G. Examples of the cellular phone communication standards include, but are not limited to, Long Term Evolution (LTE), Wideband Code Division Multiple Access (W-CDMA), Code Division Multiple Access 2000 (CDMA2000), Personal Digital Cellular (PDC), Global System for Mobile Communications (GSM) (registered trademark), and Personal Handy-phone System (PHS). Examples of the wireless communication standards include, but are not limited to, Worldwide Interoperability for Microwave Access (WiMAX) (registered trademark), IEEE802.11, Bluetooth (registered trademark), Infrared Data Association (IrDA), and Near Field Communication (NFC) (registered trademark). The communicator 6 may support one or more of the communication standards.

The receiver 7 can receive a voice signal transmitted from the controller 10. The receiver 7 can output the received voice signal as a voice. The microphone 8 can convert a voice of a user or the like into a voice signal. The microphone 8 can transmit the converted voice signal to the controller 10. The smartphone 1 may further include a speaker in addition to the receiver 7. The smartphone 1 may further include a speaker in place of the receiver 7.

The storage 9 can store therein computer programs and data. The storage 9 may be used as a work area that temporarily stores therein processing results of the controller 10. The storage 9 may include any storage device such as a semiconductor storage device or a magnetic storage device. The storage 9 may include a plurality of types of storage devices. The storage 9 may include at least an external storage medium such as a memory card or a reading device for a storage medium.

The computer programs stored in the storage 9 include an application executed in the foreground or the background and a control program that supports the operation of the application. The application causes the display 2A to display a screen, for example. The application causes the controller 10 to execute processing responsive to the gesture detected via the touch screen 2B. The control program is an operation system (OS), for example. The application and the control program may be installed in the storage 9 via wireless communication by the communicator 6 or a storage medium.

The storage 9 may store therein a control program 9A and an estimation program 9B, for example. The control program 9A can provide functions about various kinds of control for operating the smartphone 1. The control program 9A controls the communicator 6, the receiver 7, the microphone 8, and the like to implement a telephone conversation, for example. The control program 9A implements changes in screen direction displayed on the display 2A. The estimation program 9B provides a function of estimating an offset occurred in the acceleration sensor 15. The function that the control program 9A provides may be used in combination with a function that the other program such as the estimation program 9B provides.

The controller 10 can integrally control the operation of the smartphone 1. The controller 10 implements various kinds of functions. The controller 10 includes a processor. Examples of the processor include, but are not limited to, a central processing unit (CPU), a micro control unit (MCU), and a field-programmable gate array (FPGA). The controller 10 may be an integrated circuit such as a system-on-a-chip (SoC), in which other components such as the communicator 6 are integrated. The controller 10 may include a combination of a plurality of integrated circuits.

Specifically, the controller 10 executes commands contained in the computer programs stored in the storage 9 while referring to the data stored in the storage 9 as needed, controls the display 2A, the communicator 6, the acceleration sensor 15, the azimuth sensor 16, the angular velocity sensor 17, and the like, and can thereby implement various kinds of functions. The controller 10 executes commands contained in a calculation application stored in the storage 9 and can thereby implement various kinds of functions. The controller 10 can change control in accordance with the detection results of the various kinds of detectors such as the touch screen 2B, the button 3, the acceleration sensor 15, the azimuth sensor 16, and the angular velocity sensor 17.

The camera 12 may photograph an object facing the front face 1A as a front side camera. The camera 13 may photograph an object facing the rear face 1B as a rear side camera.

The connector 14 includes a terminal to which another apparatus is connected. The connector 14 may function as a communication module that causes the smartphone 1 and the other apparatus to communicate with each other via an attachment connected to the connector. The connector 14 may be a general-purpose terminal such as Universal Serial Bus (USB), High-Definition Multimedia Interface (HDMI) (registered trademark), Mobile High-Definition Link (MHL), Light Peak, Thunderbolt, a local area network (LAN) connector, or an earphone/microphone connector. The connector 14 may be an exclusively designed connector such as a Dock connector. Examples of the apparatus to be connected to the connector 14 include, but are not limited to, a charger, an external storage, a speaker, a communication apparatus, and an information processing apparatus.

The acceleration sensor 15 can detect the magnitude and a direction of acceleration acting on the smartphone 1. The acceleration sensor 15 can output the detected magnitude and direction of the acceleration as an acceleration signal. The controller 10 receives the acceleration signal that the acceleration sensor 15 has output. In one embodiment, the acceleration sensor 15 can employ a triaxial type. The triaxial type acceleration sensor 15 may detect accelerations in an X-axial direction, a Y-axial direction, and a Z-axial direction. The triaxial type acceleration sensor can detect the magnitude of the accelerations in the respective axes. The triaxial type acceleration sensor can output the direction of each of the accelerations in the respective axes in a plus or minus value. The triaxial type acceleration sensor can detect the direction of the acceleration based on the magnitude of each of the accelerations in the respective axes.

The acceleration sensor 15 may employ a piezo resistance type, an electrostatic capacitance type, a piezoelectric element (piezoelectric type), a micro electro mechanical system (MEMS) based on a thermal detection type, a servo type that returns to the original state through a feedback current by moving a movable coil, or a strain gauge type, for example.

When the direction of the acceleration is output, the controller 10 can perform control while reflecting moving direction of the smartphone 1, for example. When gravity acting on the smartphone 1 is output as acceleration, the controller 10 can perform control while reflecting a direction of gravity acting on the smartphone 1, for example.

The azimuth sensor 16 can detect azimuth of geomagnetism. The azimuth sensor 16 can output the detected azimuth of geomagnetism. When the azimuth of geomagnetism is output, the controller 10 can perform control while reflecting the azimuth of the smartphone 1, for example. When a change in the azimuth of geomagnetism is output, the controller 10 can perform control while reflecting a change in the azimuth of the smartphone 1, for example.

The angular velocity sensor 17 can detect angular velocity of the smartphone 1. The angular velocity sensor 17 can output the detected angular velocity. When the presence or absence of angular velocity is output, the controller 10 can perform control while reflecting rotation of the smartphone 1, for example.

The output of the acceleration sensor 15, the azimuth sensor 16, and the angular velocity sensor 17 can be used as a combined output of the sensors. When the combined output is used as a motion sensor, the smartphone 1 can execute control by the controller 10 while highly reflecting motion of the device.

The smartphone 1 may reflect at least one of the attitude change of the device, the position change of the device, and the rotation of the device in control. There is provided, as an example of using the attitude change for control, processing to change the display direction of the screen. There is provided, as an example of using the position change for control, processing to update the position of the smartphone 1 at a place where global positioning system (GPS) signals cannot be received. This processing is not limited to be used in the place where GPS signals cannot be received and can also be used in combination with GPS signals in order to increase accuracy of the position. There is provided, as an example of using the rotation for control, processing to update the direction of the smartphone 1 at a place where geomagnetism cannot be detected. This processing is not limited to be used in the place where geomagnetism cannot be detected and can also be used in combination with geomagnetism detection signals in order to increase accuracy of the direction.

The sensors used for the control of the smartphone 1 are not limited to the above-mentioned sensors, and various sensors such as an atmospheric pressure sensor, a temperature sensor, a humidity sensor, and a pressure sensor can be used. The detection results of the various sensors including the azimuth sensor 16 and the angular velocity sensor 17 may be used for the determination of a moving state.

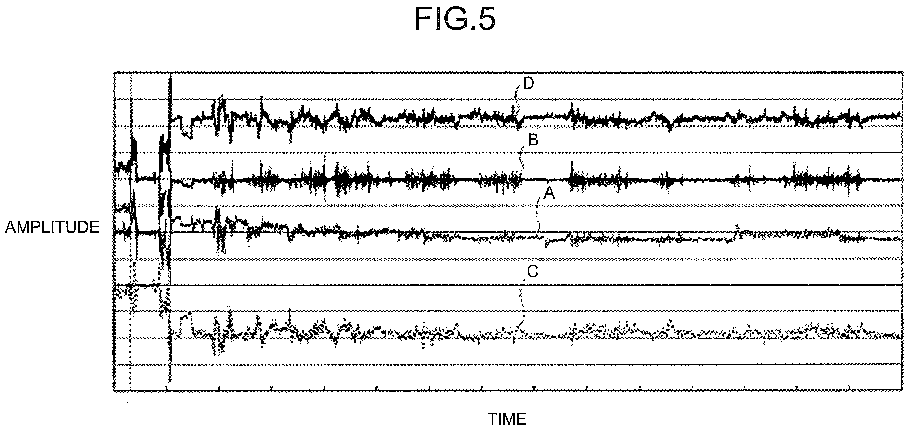

The following describes a control example based on a detection result of the acceleration sensor 15 by the controller 10 with reference to FIG. 5.

As illustrated in FIG. 5, an acceleration signal A in the X-axial direction, an acceleration signal B in the Y-axial direction, an acceleration signal C in the Z-axial direction, and a resultant vector value D obtained by combining the acceleration signals in the triaxial directions are transmitted to the controller 10 as the detection result of the acceleration sensor 15. The controller 10 can log the resultant vector value. The controller 10 analyzes the logged data and can determine a moving state of the smartphone 1. The logged resultant vector may be stored in the storage 9.

The controller 10 determines a state of the smartphone 1 or a moving state of the user of the smartphone 1 by acceleration patterns. In the following description, the state of the smartphone 1 or the moving state of the user of the smartphone 1 may be simply referred to as "the moving state of the smartphone 1" in order to simplify the description. The acceleration patterns are previously stored in the storage 9, for example. One acceleration pattern is associated with one of a plurality of moving states including a stopped state. One acceleration pattern is a change pattern obtained by previously measuring and extracting a characteristic acceleration pattern detected by the acceleration sensor 15 in one of the moving states. Examples of the acceleration pattern include a case in which the smartphone 1 is in a stationary state of being left at rest, a case in which the user of the smartphone 1 is in a state of stopping movement, a case in which the user of the smartphone 1 is in a moving state of moving by walking, a case in which the user of the smartphone 1 is in a moving state of moving while riding on a bicycle, and a case in which the user of the smartphone 1 is in a moving state of moving by means of transportation such as a car or a train.

In one embodiment, the acceleration patterns are previously stored in the storage 9 for the moving states including the stopped state respectively, for example. The acceleration patterns are stored corresponding to the logged data of the resultant vector value. The controller 10 compares the logged data of the resultant vector value with the acceleration patterns to determine the moving state of the smartphone 1.

The controller 10 may determine a case in which magnitude of the acceleration detected by the acceleration sensor 15 is less than a predetermined value to be the stopped state in place of or in addition to a case of determining the stopped state by the acceleration pattern. The controller 10 may determine a case in which the logged data of the resultant vector value does not match any of the moving states to be the stopped state in place of or in addition to a case of determining the stopped state by the acceleration pattern.

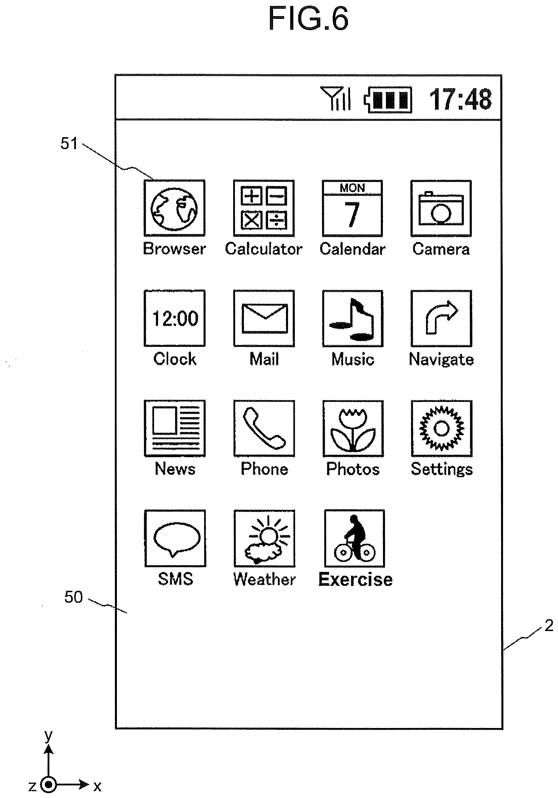

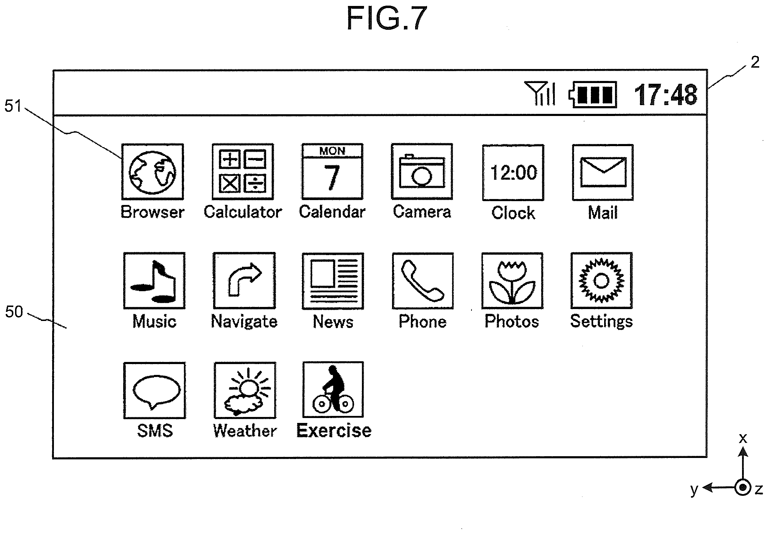

FIGS. 6 and 7 illustrate examples of a home screen displayed on the display 2A of the smartphone 1. The home screen may be referred to as a desktop, a launcher, or an idle screen. The home screen is displayed on the display 2A. The home screen is a screen in which the user can select an application to be executed among the applications installed in the smartphone 1. In this home screen 50, a plurality of icons 51 is arranged. Each of the icons 51 is previously associated with one of the applications installed in the smartphone 1. When detecting a gesture on an icon 51, the smartphone 1 executes an application associated with the icon 51.

When gravity acting on the smartphone 1 is output to the controller 10 as an acceleration, the smartphone 1 can determine orientation of the device relative to the gravity direction. As illustrated in FIGS. 6 and 7, the smartphone 1 can change the display direction of the screen along the gravity direction. FIG. 6 is a screen example displayed when the controller 10 determines that gravity is acting in the minus Y direction. FIG. 7 is a screen example displayed when the controller 10 determines that gravity is acting in the minus X direction. The controller 10 determines that gravity is acting in a direction in which a gravity vector is the greatest in the plus X direction, the minus X direction, the plus Y direction, and the minus Y direction.

The following describes the display direction of the screen. The display direction of the screen is a direction in which the screen is displayed on the display 2A. The display direction of the screen is a direction based on a direction of a letter or image displayed on the display 2A. Based on the letter or image displayed on the display 2A, vertical direction and horizontal direction of the screen can be determined. The vertical direction of the screen is independent of the horizontal direction based on the gravity direction. This independency is obvious from the fact that the screen can be displayed in one of the display direction described above even when gravity is acting only in the Z direction such as a case in which the smartphone 1 is placed horizontally.

As exemplified above, various kinds of control by the controller 10 is performed in the smartphone 1 based on the detection result of the acceleration sensor 15.

In some acceleration sensors, an offset may occur in an output acceleration depending on operating conditions. Examples of causes of the offset in the output acceleration include, but are not limited to, temperature and impact. When the offset occurs in the output acceleration of the acceleration sensor 15, the controller 10 executes various kinds of control based on the acceleration in which the offset occurs. The controller 10 may execute various kinds of control based on the acceleration considering the occurred offset.

The controller 10 can estimate constant of the offset occurred in the acceleration sensor 15. This controller 10 can correct the acceleration of the acceleration sensor based on an estimated value of the offset. This controller 10 executes various kinds of control based on the acceleration with the offset and the estimated value of the offset.

The following describes a method by which the controller 10 estimates the constant of the offset occurring in the acceleration sensor 15 in an example in which an offset occurs in the X direction of the acceleration sensor 15. This example assumes that, in the Y direction and the Z direction of the acceleration sensor 15, no offset occurs, the offset is negligibly small, or the offset is smaller than that in the X direction.

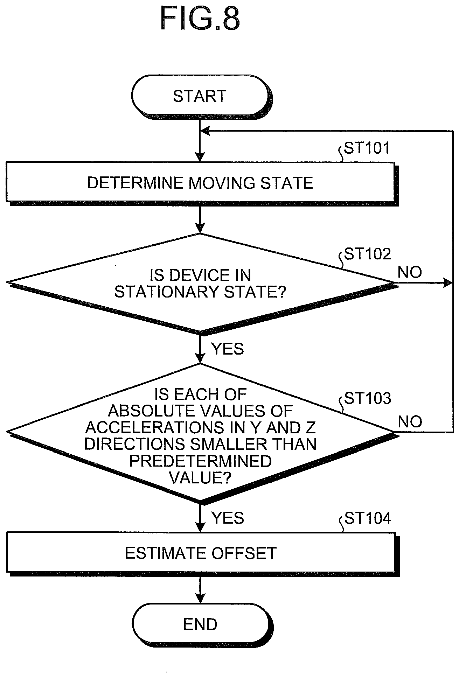

FIG. 8 is a diagram of an example of a control flow that the smartphone 1 performs. FIG. 8 illustrates a control flow that estimates the constant of the offset occurring in the acceleration sensor 15.

First of all, at Step ST101, the smartphone 1 determines the moving state of the device. This determination of the moving state of the device is performed by a fluctuation pattern of the acceleration. If an offset constant occurs in the acceleration sensor 15, the smartphone 1 can determine the moving state of the device with high precision. After determining the moving state of the device at Step ST101, the smartphone 1 proceeds to Step ST102.

At the next Step ST102, the smartphone 1 determines whether the moving state determined at Step ST101 is the stationary state. When it is determined that the moving state of the device is the stationary state (Yes), the smartphone 1 proceeds to Step ST103. When it is determined that the moving state of the device is not the stationary state (No), the smartphone 1 proceeds to Step ST101.

At the next Step ST103, the smartphone 1 determines whether each of absolute values of the accelerations in the Y direction and the Z direction is smaller than a predetermined value. This predetermined value at Step ST103 is set as appropriate depending on accuracy required for the acceleration in the X direction. When each of the absolute values of the accelerations in the Y direction and the Z direction is smaller than the predetermined value (Yes), the smartphone 1 proceeds to the next Step ST104. When each of the absolute values of the accelerations in the Y direction and the Z direction is the predetermined value or more (No), the smartphone 1 proceeds to Step ST101.

At Step ST104, the smartphone 1 estimates an offset occurring in the acceleration sensor 15. The smartphone 1 estimates the offset by causing the controller 10 to perform a computation based on the following equations.

First of all, the controller 10 calculates the supposed value ($X_{sup}$) of the acceleration in the X direction based on the following Equation (1). This Equation (1) employs average values ($Y_{ave}$ and $Z_{ave}$) of the accelerations in the Y direction and the Z direction and gravitational acceleration ($V_g$). As the average value, an average of the acceleration in the latest predetermined period is employed.

$$\pm X_{sup} = \sqrt{v_g{}^2 - Y_{ave}{}^2 - Z_{ave}{}^2} \qquad (1)$$

In this Equation (1), the average ($Y_{ave}$) of the acceleration in the Y direction and the average ($Z_{ave}$) of the acceleration in the Z direction are squared. Consequently, when the averages ($Y_{ave}$ and $Z_{ave}$) are smaller, the accuracy of the supposed value ($X_{sup}$) of the acceleration in the X direction is higher. Considering this point, the predetermined value at Step ST103 is set as appropriate depending on the accuracy required for the acceleration in the X direction.

Then, an estimated value ($X_{cal}$) of the offset occurring in the acceleration sensor 15 is determined based on Equation (2). In this Equation (2), the estimated value ($X_{cal}$) is calculated considering both cases in which the supposed

value ($X_{sup}$) of the acceleration calculated by Equation (1) is a positive value and a negative value.

$$X_{cal} = X_{ave} \pm X_{sup} \qquad\qquad (2)$$

Finally, the controller 10 employs, as the estimated value ($X_{cal}$) of the offset, one of the estimated values calculated based on Equation (2) the absolute value of which is smaller.

By subtracting the estimated value ($X_{cal}$) of the offset estimated as described above from the acceleration that the acceleration sensor 15 has detected, the smartphone 1 can estimate the acceleration with higher accuracy.

Characteristic examples have been described in order to disclose the present disclosure completely and clearly. However, the accompanying claims should not be limited to the above-described examples and should be configured to embody all modifications and substitutable configurations that those skilled in the art can create within the range of the basic matters disclosed in the present specification.

Part or the whole of the computer programs described to be stored in the storage 9 in FIG. 4 may be downloaded from another apparatus via wireless communication by the communicator 6. Part or the whole of the computer programs described to be stored in the storage 9 in FIG. 4 may be stored in a storage medium that is readable by the reading device included in the storage 9. Part or the whole of the computer programs described to be stored in the storage 9 in FIG. 4 may be stored in a storage medium such as a flash memory, hard disk drive (HDD), a compact disc (CD), a digital versatile disc (DVD), or a Blu-ray (registered trademark) disc (BD) that is readable by a reading device connected to the connector 14.

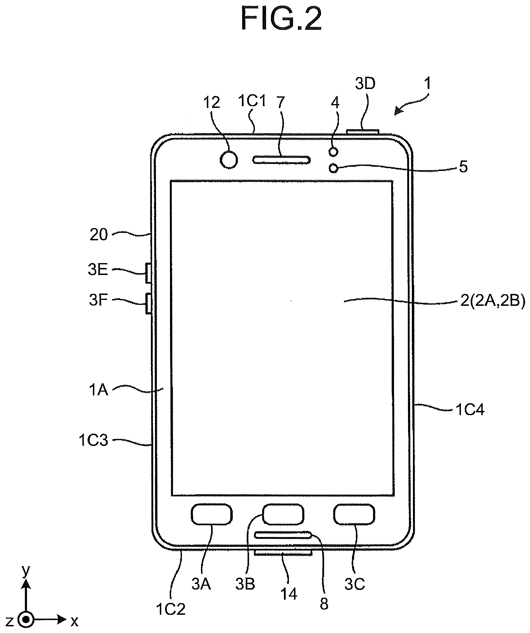

The configuration of the smartphone 1 illustrated in FIG. 4 is an example and may be changed as appropriate within an extent that does not impair essence of the present disclosure. The number and type of the button 3 are not limited to the example in FIG. 2, for example. The smartphone 1 may provide buttons with numeric arrangement, QWERTY arrangement, or the like in place of the buttons 3A to 3C as buttons for operations about the screen, for example. The smartphone 1 may provide only one button or does not provide any button for operations about the screen. Although in the example illustrated in FIG. 4 the smartphone 1 provides two cameras, the smartphone 1 may provide only one camera or does not provide any camera. The illuminance sensor 4 and the proximity sensor 5 may be configured by one sensor.

When an absolute value of a difference between an estimated value newly estimated and an estimated value currently employed is smaller than a predetermined value, the controller 10 may continuously employ the estimated value currently employed without employing the estimated value newly estimated. By continuously employing the estimated value currently employed, updated frequency of the estimated value can be reduced. The smartphone 1 that estimates means of transportation of the user can increase accuracy of determining the means of transportation, for example. When the estimated value is changed, the controller 10 determines that the acceleration that the acceleration sensor 15 has detected has changed. This is because when the estimated value is frequently changed, the controller 10 determines that the acceleration that the acceleration sensor 15 has detected is frequently changed by the change of the estimated value.

In FIG. 8, when it is determined that the device is not in the stationary state (No) at Step ST102, the smartphone 1 is described to return to Step ST101. However, this is not limited thereto. The smartphone 1 may perform a control flow that ends when it is determined that the device is not in the stationary state (No) at Step ST102, for example. The smartphone 1 may perform a control flow that ends when it is determined to be 'No' consecutively a predetermined number of times at Step ST102. When these control flows are employed, the smartphone 1 may constantly execute the new control flow, start the execution of the new control flow periodically every predetermined time, execute the new control flow when it becomes a predetermined time, or start the execution of the new control flow on occurrence of a predetermined event. Examples of the predetermined events include an event in which the moving state of the device is expected to be the stationary state or expected to become the stationary state. Examples of the events include an event to start charging, an operation to set the smartphone 1 to the sleep mode, and an operation to end a telephone conversation.

Although the smartphone 1 determines that the device is in the stationary state at Step ST101 and Step ST102 in FIG. 8, this is not limited thereto. The smartphone 1 may determine a case in which amplitude or peak-to-peak of each of the accelerations in the three directions X, Y, and Z is smaller than a predetermined value in place of step ST101 and Step ST102, for example.

Although the example in which only the offset in the X direction of the acceleration sensor 15 is described in embodiments, the smartphone 1 may estimate the offset at least in one direction among the X direction, the Y direction, and the Z direction. When the smartphone 1 estimates the offsets in a plurality of directions, first the offset in one direction that can be estimated in one situation is estimated, and then the offset in other direction that can be estimated in other situation is estimated. The smartphone 1 repeats the calibration of the offsets in each of the directions and can thereby calibrate the offsets in the directions sequentially.

When a control to cause vibration by a vibrator is performed while estimating the offset of the acceleration sensor 15, for example, the smartphone 1 may cancel the control before the vibrator starts to vibrate or cancel the estimation of the offset of the acceleration sensor 15.

**Claims**

1. A mobile device (1), comprising:

   an acceleration sensor (15) configured to detect accelerations in three axes;
   at least one controller (10) configured to control operations of the mobile device (1) based on measured values of accelerations in the three axes of the acceleration sensor (15), and
   a storage (9) configured to store a plurality of acceleration patterns that are associated with a plurality of moving states including a stationary state, wherein each of the plurality of acceleration patterns is a change pattern obtained by previously measuring and extracting a characteristic acceleration pattern detected by the acceleration sensor (15), wherein
   the at least one controller (10) is configured to

   determine whether a moving state of the mobile device (1) is the stationary state based on the plurality of the acceleration patterns stored in the storage (9),
   determine whether each of the measured values of accelerations in two axes out of the three axes is smaller than a predetermined value in response to determining that the moving state of the mobile device (1) is the stationary state, and
   estimate and change an offset of an acceleration in the remaining one axis based on the measured values of accelerations in the two axes in response to determining that each of the measured values of accelerations in the two axes is smaller than the predetermined value.

2. The mobile device (1) according to claim 1, wherein
   the at least one controller (10) is configured to

   detect an event in which the moving state of the mobile device is expected to become the stationary state, and
   perform the determination of whether the moving state of the mobile device (1) is the stationary state in response to detection of the event.

3. The mobile device (1) according to claim 1 or 2, wherein when a control to cause vibration by a vibrator is performed while estimating the offset of the acceleration in the remaining one axis based on the measured values of accelerations in the two axes, the at least one controller (10) is configured to cancel the estimation of the offset.

4. The mobile device (1) according to any one of claims 1 to 3, wherein the at least one controller (10) is configured to compute the accelerations in the two axes out of the three axes and to compute the offset of the acceleration in the remaining one axis.

5. The mobile device (1) according to any one of claims 1 to 4, wherein the acceleration sensor (15) has a characteristic in which the offset occurs in the acceleration due to at least either temperature or impact.

6. A control method of a mobile device (1) that controls operations of the mobile device (1) based on measured values of accelerations in three axes of an acceleration sensor (15), the control method comprising:

   storing a plurality of acceleration patterns that are associated with a plurality of moving states including a stationary state in a storage (9), wherein each of the plurality of acceleration patterns is a change pattern obtained by previously measuring and extracting a characteristic acceleration pattern detected by the acceleration sensor (15);
   determining whether a moving state of the mobile device (1) is the stationary state based on the plurality of the acceleration patterns stored in the storage (9);
   determining whether each of the measured values of accelerations in two axes out of the three axes is smaller than a predetermined value in response to determining that the moving state of the mobile device (1) is the stationary state; and

estimating and changing an offset of an acceleration in the remaining one axis based on the measured values of accelerations in the two axes in response to determining that each of the measured values of accelerations in the two axes is smaller than the predetermined value.

7. A non-transitory storage medium that stores a control program of a mobile device (1) that controls operations of the mobile device (1) based on measured values of accelerations in three axes of an acceleration sensor (15), the control program comprising:

storing a plurality of acceleration patterns that are associated with a plurality of moving states including a stationary state in a storage (9), wherein each of the plurality of acceleration patterns is a change pattern obtained by previously measuring and extracting a characteristic acceleration pattern detected by the acceleration sensor (15);
determining whether a moving state of the mobile device (1) is the stationary state based on the plurality of the acceleration patterns stored in the storage (9);
determining whether each of the measured values of accelerations in two axes out of the three axes is smaller than a predetermined value in response to determining that the moving state of the mobile device (1) is the stationary state; and
estimating and changing an offset of an acceleration in the remaining one axis based on the measured values of accelerations in the two axes in response to determining that each of the measured values of accelerations in the two axes is smaller than the predetermined value.

**Patentansprüche**

1. Mobile Vorrichtung (1), die Folgendes umfasst:

einen Beschleunigungssensor (15), der konfiguriert ist, Beschleunigungen längs dreier Achsen zu detektieren;
mindestens eine Steuereinrichtung (10), die konfiguriert ist, den Betrieb der mobilen Vorrichtung (1) basierend auf gemessenen Werten der Beschleunigungen längs der drei Achsen des Beschleunigungssensors (15) zu steuern, und
einen Speicher (9), der konfiguriert ist, mehrere Beschleunigungsmuster zu speichern, die mehreren Bewegungszuständen, die einen stationären Zustand enthalten, zugeordnet sind, wobei jedes der mehreren Beschleunigungsmuster einem Veränderungsmuster entspricht, das durch früheres Messen und Extrahieren eines charakteristischen Beschleunigungsmusters, das durch den Beschleunigungssensor (15) detektiert wird, erhalten wird, wobei
die mindestens eine Steuereinrichtung (10) konfiguriert ist zum
Bestimmen, ob ein Bewegungszustand der mobilen Vorrichtung (1) dem stationären Zustand entspricht, basierend auf den mehreren Beschleunigungsmustern, die in dem Speicher (9) gespeichert sind,
Bestimmen, ob jeder der gemessenen Werte der Beschleunigungen in zweier der drei Achsen kleiner ist als ein vorbestimmter Wert, als Reaktion auf das Bestimmen, dass der Bewegungszustand der mobilen Vorrichtung (1) dem stationären Zustand entspricht, und
Schätzen und Verändern eines Versatzes einer Beschleunigung längs der verbleibenden einen Achse basierend auf den gemessenen Werten der Beschleunigungen längs der zwei Achsen als Reaktion auf das Bestimmen, dass jeder der gemessenen Werte der Beschleunigungen in den zwei Achsen kleiner ist als der vorbestimmte Wert.

2. Mobile Vorrichtung (1) nach Anspruch 1, wobei
die mindestens eine Steuereinrichtung (10) konfiguriert ist
zum Detektieren eines Ereignis, in dem zu erwarten ist, dass der Bewegungszustand der mobilen Vorrichtung der stationäre Zustand wird, und
Ausführen der Bestimmung, ob der Bewegungszustand der mobilen Vorrichtung (1) den stationären Zustand entspricht, als Reaktion auf das Detektieren des Ereignisses.

3. Mobile Vorrichtung (1) nach Anspruch 1 oder 2, wobei die mindestens eine Steuereinrichtung (10) konfiguriert ist, die Schätzung des Versatzes zu beenden, wenn während des Schätzens des Versatzes der Beschleunigung längs der verbleibenden einen Achse basierend auf den gemessenen Werten der Beschleunigungen längs der zwei Achsen eine Steuerung, um die Vibration eines Vibrators zu veranlassen, durchgeführt wird.

**4.** Mobile Vorrichtung (1) nach einem der Ansprüche 1 bis 3, wobei die mindestens eine Steuereinrichtung (10) konfiguriert ist zum Berechnen der Beschleunigungen längs der zwei der drei Achsen und Berechnen des Versatzes der Beschleunigung längs der verbleibenden einen Achse.

**5.** Mobile Vorrichtung (1) nach einem der Ansprüche 1 bis 4, wobei der Beschleunigungssensor (15) eine Eigenschaft aufweist, in der der Versatz in der Beschleunigung zumindest aufgrund entweder Temperatur oder Stoß auftritt.

**6.** Steuerverfahren einer mobilen Vorrichtung (1), die den Betrieb der mobilen Vorrichtung (1) basierend auf gemessenen Werten der Beschleunigungen längs dreier Achsen eines Beschleunigungssensors (15) steuert, wobei das Steuerverfahren Folgendes umfasst:

Speichern mehrerer Beschleunigungsmuster, die mehreren Bewegungszuständen, die einen stationären Zustand enthalten, zugeordnet sind, in einem Speicher (9), wobei jedes der mehreren Beschleunigungsmuster einem Veränderungsmuster entspricht, das durch früheres Messen und Extrahieren eines charakteristischen Beschleunigungsmusters, das durch den Beschleunigungssensor (15) detektiert wird, erhalten wird;
Bestimmen, ob ein Bewegungszustand der mobilen Vorrichtung (1) dem stationären Zustand entspricht, basierend auf den mehreren Beschleunigungsmustern, die in dem Speicher (9) gespeichert sind;
Bestimmen, ob jeder der gemessenen Werte der Beschleunigungen längs zweier der drei Achsen kleiner ist als ein vorbestimmter Wert als Reaktion auf das Bestimmen, dass der Bewegungszustand der mobilen Vorrichtung (1) dem stationären Zustand entspricht; und
Schätzen und Verändern eines Versatzes einer Beschleunigung längs der verbleibenden einen Achse basierend auf den gemessenen Werten der Beschleunigungen längs der zwei Achsen als Reaktion auf das Bestimmen, dass jeder der gemessenen Werte der Beschleunigungen längs der zwei Achsen kleiner ist als der vorbestimmte Wert,

**7.** Nicht transitorisches Speichermedium, das ein Steuerprogramm einer mobilen Vorrichtung (1) speichert, das den Betrieb der mobilen Vorrichtung (1) basierend auf gemessenen Werten der Beschleunigungen längs dreier Achsen eines Beschleunigungssensors (15) steuert, wobei das Steuerprogramm Folgendes umfasst:

Speichern mehrerer Beschleunigungsmuster, die mehreren Bewegungszuständen, die einen stationären Zustand enthalten, zugeordnet sind, in einem Speicher (9), wobei jedes der mehreren Beschleunigungsmuster einem Veränderungsmuster entspricht, das durch früheres Messen und Extrahieren eines charakteristischen Beschleunigungsmusters, das durch den Beschleunigungssensor (15) detektiert wird, erhalten wird;
Bestimmen, ob ein Bewegungszustand der mobilen Vorrichtung (1) dem stationären Zustand entspricht, basierend auf den mehreren Beschleunigungsmustern, die in dem Speicher (9) gespeichert sind;
Bestimmen, ob jeder der gemessenen Werte der Beschleunigungen längs zweier der drei Achsen kleiner ist als ein vorbestimmter Wert als Reaktion auf das Bestimmen, dass der Bewegungszustand der mobilen Vorrichtung (1) dem stationären Zustand entspricht; und
Schätzen und Verändern eines Versatzes einer Beschleunigung längs der verbleibenden einen Achse basierend auf den gemessenen Werten der Beschleunigungen längs der zwei Achsen als Reaktion auf das Bestimmen, dass jeder der gemessenen Werte der Beschleunigungen längs der zwei Achsen kleiner ist als der vorbestimmte Wert,

## Revendications

**1.** Dispositif mobile (1), comprenant :

un capteur d'accélération (15) conçu pour détecter des accélérations dans trois axes ;
au moins un dispositif de commande (10) conçu pour commander des opérations du dispositif mobile (1) en fonction de valeurs mesurées d'accélérations dans les trois axes du capteur d'accélération (15), et
un stockage (9) conçu pour stocker une pluralité de schémas d'accélération qui sont associés à une pluralité d'états de déplacement comprenant un état stationnaire, chacun de la pluralité de schémas d'accélération constituant un schéma de changement obtenu par la mesure et l'extraction préalables d'un schéma d'accélération caractéristique détecté par le capteur d'accélération (15),
l'au moins un dispositif de commande (10) étant conçu pour

déterminer si un état de déplacement du dispositif mobile (1) est l'état stationnaire en fonction de la pluralité de schémas d'accélération stockés dans le stockage (9),
déterminer si chacune des valeurs mesurées d'accélérations dans deux axes sur les trois axes est inférieure à une valeur prédéterminée en réponse à la détermination que l'état de déplacement du dispositif mobile (1) est l'état stationnaire, et
estimer et changer un décalage d'une accélération dans l'axe restant en fonction des valeurs mesurées d'accélérations dans les deux axes en réponse à la détermination que chacune des valeurs mesurées d'accélérations dans les deux axes est inférieure à la valeur prédéterminée.

2. Dispositif mobile (1) selon la revendication 1, dans lequel
l'au moins un dispositif de commande (10) est conçu pour

détecter un événement dans lequel on prévoit que l'état de déplacement du dispositif mobile devient l'état stationnaire, et
effectuer la détermination de savoir si l'état de déplacement du dispositif mobile (1) est l'état stationnaire en réponse à une détection de l'événement.

3. Dispositif mobile (1) selon la revendication 1 ou 2, dans lequel lorsqu'une commande pour entraîner une vibration par un vibrateur est effectuée pendant l'estimation du décalage de l'accélération dans l'axe restant en fonction des valeurs mesurées d'accélérations dans les deux axes, l'au moins un dispositif de commande (10) est conçu pour annuler l'estimation du décalage.

4. Dispositif mobile (1) selon l'une quelconque des revendications 1 à 3, dans lequel l'au moins un dispositif de commande (10) est conçu pour calculer les accélérations dans les deux axes sur les trois axes et pour calculer le décalage de l'accélération dans l'axe restant.

5. Dispositif mobile (1) selon l'une quelconque des revendications 1 à 4, dans lequel le capteur d'accélération (15) présente une caractéristique dans laquelle le décalage se produit dans l'accélération en raison d'au moins soit température soit l'impact.

6. Procédé de commande d'un dispositif de commande (1) qui commande des opérations du dispositif mobile (1) en fonction de valeurs mesurées d'accélérations dans trois axes d'un capteur d'accélération (15), le procédé de commande comprenant :

le stockage d'une pluralité de schémas d'accélération qui sont associés à une pluralité d'états de déplacement comprenant un état stationnaire dans un stockage (9), chacun de la pluralité de schémas d'accélération constituant un schéma de changement obtenu par la mesure et l'extraction préalables d'un schéma d'accélération caractéristique détecté par le capteur d'accélération (15) ;
la détermination de savoir si un état de déplacement du dispositif mobile (1) est l'état stationnaire en fonction de la pluralité des schémas d'accélération stockés dans le stockage (9) ;
la détermination de savoir si chacune des valeurs mesurées d'accélérations dans deux axes sur les trois axes est inférieure à une valeur prédéterminée en réponse à la détermination que l'état de déplacement du dispositif mobile (1) est l'état stationnaire ; et
l'estimation et le changement d'un décalage d'une accélération dans l'axe restant en fonction des valeurs mesurées d'accélérations dans les deux axes en réponse à la détermination que chacune des valeurs mesurées d'accélérations dans les deux axes est inférieure à la valeur prédéterminée.

7. Support de stockage non transitoire qui stocke un programme de commande d'un dispositif mobile (1) qui commande des opérations du dispositif mobile (1) en fonction de valeurs mesurées d'accélérations dans trois axes d'un capteur d'accélération (15), le programme de commande comprenant :

le stockage d'une pluralité de schémas d'accélération qui sont associés à une pluralité d'états de déplacement comprenant un état stationnaire dans un stockage (9), chacun de la pluralité de schémas d'accélération constituant un schéma de changement obtenu par la mesure et l'extraction préalables d'un schéma d'accélération caractéristique détecté par le capteur d'accélération (15) ;
la détermination de savoir si un état de déplacement du dispositif mobile (1) est l'état stationnaire en fonction de la pluralité de schémas d'accélération stockés dans le stockage (9) ;
la détermination de savoir si chacune des valeurs mesurées d'accélérations dans deux axes sur les trois axes est inférieure à une valeur prédéterminée en réponse à la détermination que l'état de déplacement du dispositif mobile (1) est l'état stationnaire ; et

l'estimation et le changement d'un décalage d'une accélération dans l'axe restant en fonction des valeurs mesurées d'accélérations dans les deux axes en réponse à la détermination que chacune des valeurs mesurées d'accélérations dans les deux axes est inférieure à la valeur prédéterminée.

# FIG.1

# FIG.2

# FIG.3

# FIG.4

1

11
SPEAKER
(SOUND OUTPUT
MODULE)

12
CAMERA
(FRONT SIDE
CAMERA)

13
CAMERA
(REAR SIDE
CAMERA)

14
CONNECTOR

15
ACCELERATION
SENSOR

16
AZIMUTH SENSOR

17
ANGULAR VELOCITY
SENSOR

10
CONTROLLER

9
STORAGE

9A
CONTROL
PROGRAM

9B
ESTIMATION
PROGRAM

2
TOUCH SCREEN
DISPLAY

2A
DISPLAY

2B
TOUCH SCREEN

3
BUTTON

4
ILLUMINANCE
SENSOR

5
PROXIMITY SENSOR

6
COMMUNICATOR

7
RECEIVER
(VOICE OUTPUT
UNIT)

8
MICROPHONE
(VOICE INPUT UNIT)

FIG.5

# FIG.6

# FIG.7

EP 3 151 019 B1

# FIG.8

```
              START

                │
                ▼                    ⌐ST101
        ┌──────────────────────────┐
        │  DETERMINE MOVING STATE  │
        └──────────────────────────┘
                │
                ▼                    ⌐ST102
             ╱        ╲                   NO
          ╱   IS DEVICE IN  ╲ ──────────────►
         ╱  STATIONARY STATE? ╲
          ╲                  ╱
             ╲    ╱
             │ YES
             ▼                       ⌐ST103
          ╱   IS EACH OF   ╲
        ╱  ABSOLUTE VALUES OF ╲            NO
       ╱ ACCELERATIONS IN Y AND Z ╲ ──────►
       ╲  DIRECTIONS SMALLER THAN ╱
        ╲    PREDETERMINED  ╱
          ╲     VALUE?    ╱
             │ YES                   ⌐ST104
        ┌──────────────────────────┐
        │     ESTIMATE OFFSET      │
        └──────────────────────────┘
                │
                ▼
               END
```

**EP 3 151 019 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140012531 A
- JP 2006107657 A